# EUROPEAN PATENT SPECIFICATION

(11) **EP 0 621 743 B1**
(45) Date of publication and mention of the grant of the patent: **09.09.1998**
(21) Application number: 94201033.1
(22) Date of filing: 15.04.1994
(51) Int. Cl.: H05B 41/29, H02M 1/00

(54) **Power factor correcting circuit**
Schaltung zur Leistungsfaktorverbesserung
Circuit pour améliorer le facteur de puissance

(30) Priority: 23.04.1993 US 52311; 23.04.1993 US 52312
(43) Date of publication of application: 26.10.1994
(73) Proprietor: Koninklijke Philips Electronics N.V., 5621 BA Eindhoven (NL)
(72) Inventor: Mattas, Charles, 5656 AA Eindhoven (NL); Bergervoet, Jos, 5656 AA Eindhoven (NL); Hernandez, Adan, 5656 AA Eindhoven (NL); Bruning, Gert, 5656 AA Eindhoven (NL)
(74) Representative: Evers, Johannes Hubertus Maria

(56) References cited:
- EP-A- 0 311 424
- WO-A-92/04808
- GB-A- 2 261 779

## Description

The invention relates to a circuit arrangement for operating a discharge lamp with a high frequency current comprising
- input terminals for connection to a source of low frequency supply voltage,
- rectifier means coupled to said input terminals for rectifying said low frequency supply voltage,
- a first circuit comprising series arrangement of unidirectional means and first capacitive means coupled to a first output terminal N3 of said rectifier means and a second output terminal N5 of said rectifier means,
- inverter means shunting said first capacitive means for generating the high frequency current out of the rectified low frequency supply voltage,
- a load circuit comprising inductive means, second capacitive means and terminals for lamp connection, said load circuit being coupled to a first terminal N1 of said inverter means and to a second terminal N2 between the unidirectional means and the first output terminal N3 of said rectifier means.

Such a circuit arrangement is known from published PCT application WO 92/04808. Because of the coupling of the load circuit between the terminal N1 and the terminal N2 a high frequency current is drawn from the supply voltage source when the voltage of the first capacitive means, serving as main storage, is higher than the momentary amplitude of the rectified supply voltage present between terminals N3 and N5. This high frequency current improves the power factor of the circuit arrangement. However, the supply current that is drawn from the low frequency supply voltage during lamp operation still has a substantial spike near the maximum amplitude of the low frequency supply voltage, when current is being drawn directly as a charging current for the first capacitive means. For this reason the supply current still has an undesirably high harmonic content.

The present invention has for its object to provide a circuit arrangement, that during stationary lamp operation draws a current from the low frequency supply source having a relatively low harmonic content.

A circuit arrangement according to the invention is for this purpose characterized in that the component values and the frequency of said high frequency current are selected such that during stationary lamp operation the voltage present over the first capacitive means is always higher than the amplitude of the rectified low frequency supply voltage.

As a result of the voltage present over the first capacitive means being always higher than the amplitude of the low frequency supply voltage, current is never drawn directly from the low frequency supply as a charging current for the first capacitive means. For this reason the supply current has a relatively low harmonic content.

It was found that smooth operation of the circuit arrangement could be realized by incorporating into the circuit arrangement a second circuit comprising third capacitive means (C1) and connecting terminal N2 to terminal N5. The third capacitive means are dimensioned such that the voltage over the third capacitive means is higher than rectified supply voltage during a time interval in each high frequency period and lower than the rectified supply voltage during the remaining part of each high frequency period. Therefore the third capacitive means are only charged from the power supply with a series of high frequency current pulses so that the supply current contains no spikes and has a relatively low harmonic content.

The rectifier means present in the circuit arrangement have to meet less severe requirements in case the circuit arrangement is further provided with a third circuit comprising further unidirectional means D5 and connected between terminal N3 and terminal N2.

It was further found that embodiments of a circuit arrangement according to the present invention could be realized in a relatively simple way, in case the unidirectional means comprise diode means.

Good results were obtained with circuit arrangements in which the inverter means comprise a series arrangement of two switching elements and a drive circuit for generating a drive signal for rendering the switching elements alternately conducting and non-conducting.

A preferred embodiment of a circuit arrangement according to the invention further comprises
- sensing means for generating a control signal that varies periodically with a frequency equal to twice the frequency of the supply voltage,
- control means coupled to said sensing means for modulating the frequency of the high frequency current in dependency of the control signal.

By modulating the frequency in dependence of the control signal, the crest factor of the lamp current is substantially improved. The control signal can be for instance derived from the rectified supply voltage or the high frequency current. In the first case it was found that the lamp current crest factor can be controlled at a relatively low value when the control means decrease the operating frequency of the inverter means when the momentary amplitude of the rectified supply voltage increases and increase the operating frequency of the inverter means when the momentary amplitude of the rectified supply voltage decreases. In the second case it was found that the crest factor of the lamp current is well controlled at a relatively low value when the control means decrease the operating frequency of the inverter means when the momentary amplitude of the high frequency current decreases and increase the operating frequency of the inverter means when the momentary amplitude of the high frequency current increases.

Embodiments of the invention will be explained in more detail with reference to a drawing, in which
Fig. 1 is a block diagram of an electronic ballast according to the invention,
Fig. 2 is a simplified schematic diagram of a first ballast circuit according to Fig. 1,
Fig. 3 is a more detailed schematic diagram of the circuit of Fig. 2,
Fig. 4 is a simplified schematic of another ballast circuit according to Fig. 1, and
Figs. 5 and 5a are simplified schematics of other ballast circuits according to Fig. 1, and
Fig. 6 is a graph showing variation of certain voltages, present during lamp operation in the ballast circuit of Figure 4 over one input power line cycle.

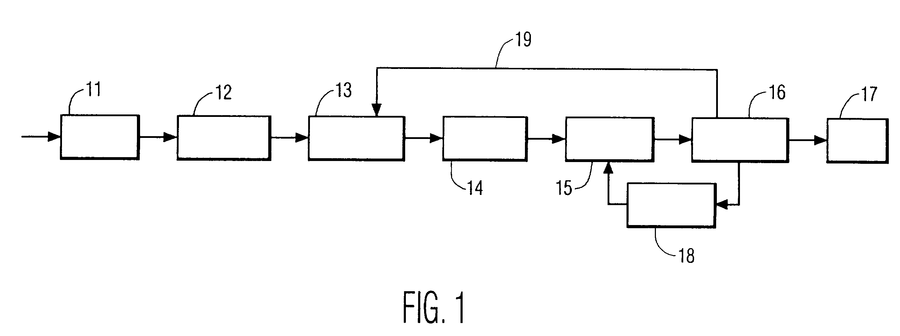

As shown in Fig. 1, a practical electronic ballast circuit according to the invention is formed from a small number of basic circuits, each individually being well-known or easily devised by one of ordinary skill in the art. Power input is from a standard low frequency AC line 10, such as 120 v, 60 Hz. A filter 11 prevents conduction of high frequency and RF noise into the line 10. A rectifier 12 is typically formed as a full-wave bridge rectifier, whose output is rectified half-sine-wave pulses. The rectifier output is coupled by a coupling circuit 13, typically consisting of one or two diodes, to an energy storage element 14, such as an electrolytic capacitor, across which a relatively high DC voltage is maintained. As described below, during normal operation the voltage across this storage capacitor is greater than the peak voltage appearing at the output of the rectifier 12.

A high frequency generator 15 changes the DC from the storage device 14 to a high frequency voltage having a frequency typically between 20 and 75 kHz. A resonance coupling circuit 16, connected to the generator 15, is arranged to be resonant at a frequency somewhat lower than the normal range of the high frequency voltage. A fluorescent lamp 17 is connected to or across a part of the coupling circuit 16. A control circuit 18, which is preferably formed at least in part by an integrated circuit, senses voltages or currents at one or more places in the coupling circuit 16, and provides control signals for the generator 15.

A feedback connection 19 from the coupling circuit 16 to the coupling circuit 13 causes current to be drawn from the rectifier/filter 12/11 combination during part of every cycle of the high frequency. Charging current flows to storage device 14 during at least one different part of each cycle of the high frequency. Throughout all of every cycle of the line input, stored energy in the device 14 is higher than that which would be obtained by normal charging from the rectifier 12.

In accordance with the invention, the circuit values and operating frequency range are selected such that the current from the input power line has a waveform substantially the same as the line voltage waveform, and the control circuit 18 senses a parameter which varies over the course of each line voltage cycle, and modulates the frequency of generator 15 over the same period in such a way as to maintain the high frequency current through the lamp substantially constant. This directly reduces the lamp crest factor. At the same time, the deviation of frequency, from a nominal value which minimizes line current harmonics, need not be so great nor continued for so long (that is, only a portion of a line half cycle), that line current is distorted excessively.

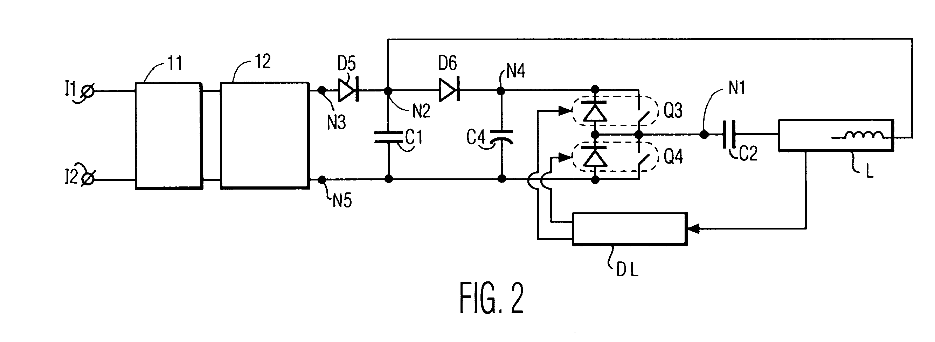

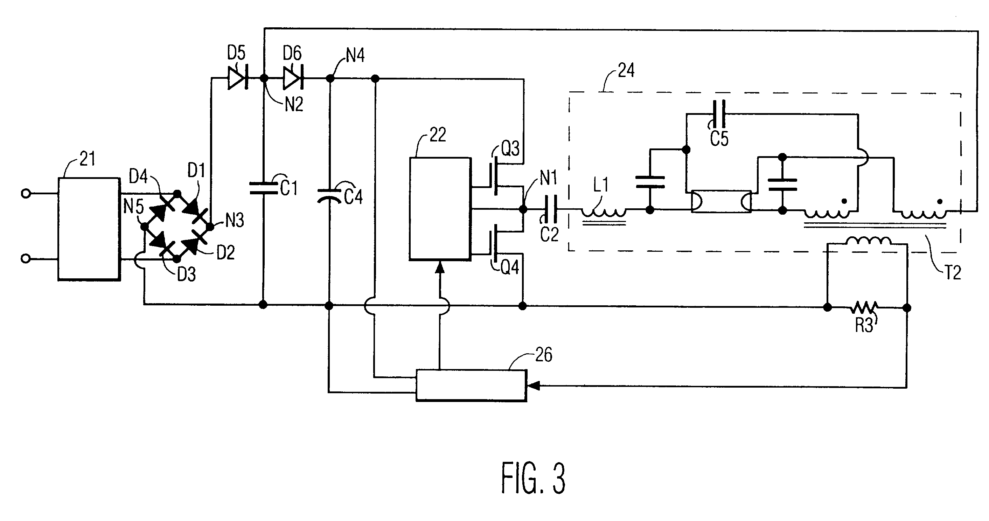

One embodiment of the invention is shown in Figs. 2 and 3, in which corresponding circuit elements have the same identification. This circuit is intended for use with a 240 VAC, 50 Hz input line, for a lamp ballast in Europe. An EMI filter 21 is connected between the input line terminals and a full-wave bridge rectifier formed by diodes D1-D4. A fast recovery diode D5 is connected between the bridge rectifier positive terminal and a junction N2 to which lamp current flows. A fast recovery isolating diode D6, poled in the same direction, is connected between the junction and a storage capacitor C4. Transistors Q3 and Q3 are connected in series across capacitor C4, to form a half-bridge inverter having an inverter output junction N1. The inverter is driven by a conventional circuit 22.

In this circuit, the lamp current is directly fed from the inverter junction N1, through a coupling capacitor C2 and a coupling network 24, to the junction 2. During those portions of each high frequency cycle when neither diodes D5 nor D6 are conducting, all the lamp current then flows through a low-value capacitor C1. A signal proportional to the instantaneous lamp current is obtained from a current transformer T2, across whose output winding a low-value resistor R3 is connected. Switching of the inverter is controlled by a conventional integrated circuit controller 26.

The lamp coupling circuit 24 contains a choke L1 and a starting capacitor C5. An exemplary circuit of the embodiment of Fig. 3 has the values given below. In this circuit the capacitor C5 has a sufficient capacitance, in comparison with C1, that it has an appreciable effect on the resonant frequency, and current, during normal operation. This is an effect which is fully understood, and easily computed, by those of ordinary skill in the electronic ballast art. For simplicity, however, the following discussions of circuit operation do not refer separately to the effect of C5.

| | |
|---|---|
| C1 | 15 nf |
| C2 | 330 nf |
| C4 | 56 µf |
| C5 | 15 nf |
| L1 | 1.7 mh |
| R3 | 2.4 Ω |

At a line voltage of 230 v, this circuit was operated with an inverter frequency varying between 39 and 54 kHz over the course of each half cycle of the line voltage, the frequency being a maximum at line voltage crossover. Total harmonic distortion in the line current was 9%, and lamp crest factor was 1.4. Over the range of 207 volts to 264 volts, line current harmonic content remained under 15% except near the low end of the range.

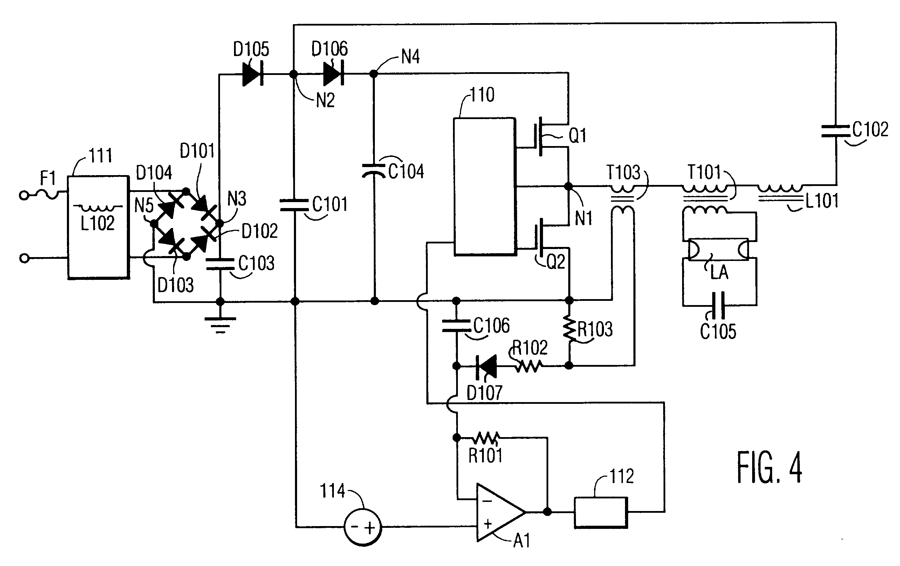

A preferred embodiment of the invention for use with conventional fluorescent lamp luminaries having removable lamps, and supplied with power according to U.S. standards, is shown in Fig. 4. A fluorescent lamp LA is energized from a high frequency half-bridge inverter formed by two transistors Q1 and Q2. The primary of a load transformer T101 and a current transformer T103 are connected in series between the output node N1 of the inverter and a series resonant circuit formed by a choke L101 and a tuning capacitor C101. The tuning capacitor C101 is connected between a node N2 in the power input section of the ballast, and the ground connection. A coupling capacitor C102 is connected in this series circuit, between the choke L101 and node N2.

The source of power for the ballast is a 120 V, 60 Hz input AC line. The input line is connected to a conventional bridge rectifier D101-D104 through a fuse F1 and an interference filter 111 including line chokes L102 and a capacitor C103. The bridge rectifier negative output N5 is connected to the circuit ground, and the positive output defines a node N3 having voltage v_{RECT} and is connected through a fast recovery diode D105 to the node N2. A second fast recovery diode D106 is connected between the node N2 and a node N4, which is the high voltage supply point for the inverter transistor Q1. A storage capacitor C104 is connected across the inverter power input, between node N4 and the circuit ground. The diodes D105 and D106, and the coupling from the tuned high frequency circuit to them, act together to provide energy transfer from the input line to the capacitor C104 at a high frequency rate, and produce an elevated DC input to the inverter as will be explained below.

The fluorescent lamp load is connected across the secondary of the transformer T101, and a conventional starting capacitor C105 is also connected to the lamp filaments.

The inverter is controlled by a driver circuit 110, which in turn is controlled by a high frequency signal from a voltage controlled oscillator 112 whose frequency is determined by the output of a differential amplifier A1. The amplifier A1 has its positive input connected to a reference voltage source 114, and has a feedback resistor R101 connected from its output to its negative input. The negative input is also connected to a rectifier and RC filter formed by diode D107, resistor R102 and capacitor C106 which rectify and filter the high frequency components of the lamp current, leaving the rectified current modulation envelope which varies at the frequency of the bridge rectifier output (120 times per second). This current-sensing signal is obtained from a low value resistor R103 across the secondary of current transformer T103.

The circuits of Figs. 3 and 4 operate in the manner described below with respect to Fig. 4, although powered from different AC line voltages and frequencies, with different lamp loads, and at different inverter frequencies. This is accomplished by adjusting the component values, as will be clear to those of ordinary skill in the electronic ballast art.

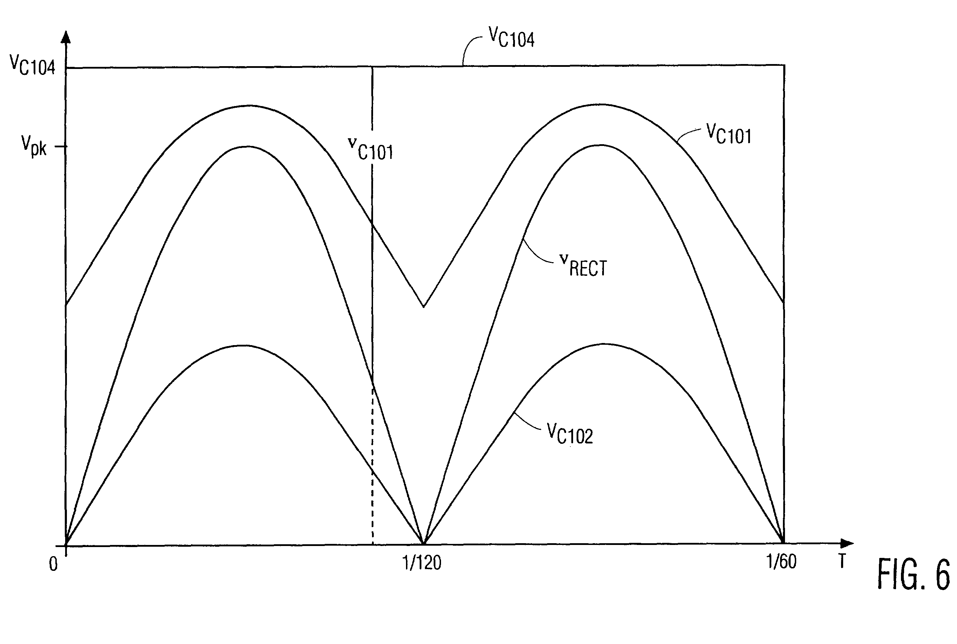

The inverter formed by transistors Q1 and Q2 is normally operated at a frequency above the effective resonant frequency of the resonance circuit with a 50% duty cycle for each transistor. During start-up, the frequency is swept downward toward the resonant frequency, as is well known. After the lamp has started, the high frequency current through the inductor L101 (also the primary of transformer T101), causes the voltage v_{C101} at node N2 to rise and fall, once each cycle of lamp current, between limits shown in Fig. 6 related to the action of the diodes D105 and D106. The voltage v_{C101} is the average voltage across C101 during an entire high frequency cycle; this varies as shown over the course of one line voltage cycle. The voltage V_{C102} across the coupling capacitor varies little during the course of one high frequency cycle, but varies over the course of a line voltage cycle between half the peak line voltage Vₚₖ, when the line is at its peak, and approximately zero when the line is near zero.

Circuit behaviour follows the cyclical pattern now to be described, except that, when the line voltage is near a zero crossing, there may be a difference in the instant in the high frequency cycle when the inductor current reaches its peak, and the period of time when charging current flows to capacitor C104 is delayed. For simplicity, the effect of C105 is ignored; it does not change the general way in which the circuit operates, but only affects precise values of current and voltage.

During a first stage of each high frequency cycle, immediately after transistor Q1 has switched on, because of the substantial inductance of inductor L101 current will still be flowing in a direction from node N2 to node N1. Q2 being switched off, current during this stage will flow in the "backwards" direction, through the reverse current diode which forms part of Q1, through C104 in a direction to charge C104, through the bridge rectifier and input power line (or filter), diode D105 and coupling capacitor C102. The inductor current now falls rapidly.

A certain period of time after transistor Q1 has been turned on, current through the inductor L101 reverses as the circuit enters the second stage of the high frequency cycle. The voltage at node N2 (which had been held by diode D105 at the then-existing instantaneous value of the rectified line voltage v_{RECT}) then starts to rise as capacitor C101 is charged. Capacitor C104 is now discharging through transistor Q1, and inductor L101 current rises at a rate determined by the voltage V_{C102} across coupling capacitor C102 (which changes little during one high frequency cycle), the instantaneous difference in voltage (V_{C104} - v_{C101}) between the capacitors C101 and C104, the inductance L101 and the effective resistance of the lamp. After the node N2 voltage reaches the sum of the voltage V_{C104} across the storage capacitor C104 plus the diode drop of D106, the circuit enters its third stage. The node N2 voltage remains constant, and no current flows through capacitor C104. Driven solely by the voltage across coupling capacitor C102, the still rising inductor current flows through diode D106.

In a fourth stage, immediately after the inverter switches, Q2 being on and Q1 off, the voltage driving the tank circuit is reversed because the voltage across capacitor C101 exceeds that across C102. Current is still flowing through diode D106, and will flow through capacitor C104 in a charging direction, but at a rapidly falling rate. When the lamp current reverses, the circuit enters the fifth stage. Diode D106 will cut off, and the voltage across C101 will start falling toward the then-existing rectified power line voltage. The reverse current will increase with a waveform similar to the previous positive current increase. No current flows through capacitor C104.

When v_{C101} reaches the rectified line voltage less the forward drop of diode D105, the sixth stage is reached, and v_{C101} remains constant. The inductor current then flows through transistor Q2, the bridge rectifier and the line or line filter, and through diode D105 and coupling capacitor C102. Immediately after the inverter again switches, and Q2 is turned off, this current will start to fall sharply as it flows through Q1, in a charging direction through C104, and through the bridge rectifier and diode D105, thus repeating stage 1 as described above.

The six different stages of one high frequency cycle are only partly symmetrical. The storage capacitor C104 receives charging current during the first and fourth stages, immediately following each switching of the inverter, but discharges only during stage two, when the voltage across capacitor C101 is being raised from the value where diode D105 was conducting to the value where diode D6 conducts. A current pulse is drawn from the AC line during stages 1 and 6.

As described above, the voltage V_{C102} across capacitor C102 equals the difference between the average voltage V_{C104}/2 at node N1 and the average voltage V_{C101} over the course of one high frequency cycle. V_{C101} and V_{C102} change greatly over the course of one half cycle of the power line voltage, and so does the magnitude of the excursion of the voltage v_{C101} across capacitor C101 during a high frequency cycle, but V_{C101} and V_{C102} change in a direction opposite to the magnitude change. When the line voltage v_{RECT} (and correspondingly V_{C102}) are quite low, shortly before the instant of inverter switching the voltage across the inductor and the effective load resistance may be so low that current through the inductor starts falling before the inverter switches. D105 conduction is delayed. This is consistent with the desire that line current waveform be identical to line voltage waveform. At the instant of line voltage crossover, the voltage v_{C101} should reach its low limit (diode D105 is about to conduct) just as inductor current reaches zero.

When the component values and inverter frequency have been properly selected, the envelope (connected average) of the current pulses through diode D105 match the rectifier output voltage waveform. Except for the high frequency pulsation which is filtered by the interference filter, to the rectifier the ballast load looks like a pure resistance. Analysis shows that this requires that the value of storage capacitor C104 be sufficiently high that C_{C104} does not change appreciably over the course of a line voltage cycle. It would seem that this should also cause the lamp current crest factor to be a minimum, but the reverse is actually true. Both the waveform and the magnitude of inductor current change, in a complex fashion, as the rectifier output voltage changes over the course of one input voltage cycle. As a result, with a ballast operated as described so far, lamp crest factor will typically exceed 1.7.

With a constant inverter frequency at the exact value which makes the ballast look resistive, the current modulation envelope through the lamp circuit never approaches zero, because capacitor C101 is charged and discharged between the power line rectifier output value v_{RECT} and the voltage V_{C104} across capacitor C104 once each high frequency cycle. The unexpected result is that the component of lamp current due to current through C101 (that is, current flowing during the second and fifth stages described) is maximum when the line voltage is zero, and minimum when the line voltage is at its peak. At the same time, the envelope of current through diode D105, at 120 Hz, is the same shape as the rectified line voltage.

Applicants have discovered that, in a ballast constructed and operated otherwise as above, by modulating the inverter frequency with a frequency excursion generally proportional to the load current modulation, the lamp current can be maintained essentially constant with no significant effect on line current harmonics. To achieve this result, it is necessary that the storage capacitor have sufficient capacitance that its voltage does not vary appreciably during one cycle of line voltage, and that the value of C101 be small enough that current flows through diode D105 only in response to the high frequency current.

In the preferred embodiment, the filter R102/C106 provides a signal to the amplifier A1 which causes the inverter frequency to vary linearly with the load current modulation envelope. Maximum frequency, and lamp current, occur at the time of line voltage crossover.

In general, to achieve this desired result, C102 > > C101; C104 > > C102; and |Z₀| > |Z_{LA}|, where |Z₀| = √(L101/C101) and |Z_{LA}| is the effective lamp impedance reflected to the primary side of transformer T101. An exemplary circuit of the embodiment of Fig. 4 used the following component values:

| | |
|---|---|
| C101 | 47 nf |
| C102 | 330 nf |
| C103 | 470 nf |
| C104 | 87 µf |
| C105 | 4.7 nf |
| L101 | 0.15 mh |
| L102 | 800 µh |
| \|Z_{LA}\| | 23 Ω |

The above analysis was all based on the assumption that operation would be essentially linear. Thus, for a given input power voltage, the circuit values are correct to provide the desired power to a given load with a nominal input line voltage.

If the load is linear, and its power were permitted to vary according to the square of the input voltage level (inverter frequency having the same average value over the course of a line cycle, although being modulated during each 60 Hz line cycle), a standard tolerance of ± 10% on the line voltage will not affect line harmonics or load current crest factor. When, according to accepted practice, the ballast control circuit compensates for changes in line voltage, this compensation may cause the harmonic distortion of the line current to be greater than could otherwise be obtained because the average frequency, over one input voltage cycle, is different from that frequency which causes the load on the rectifier to look resistive. However, the overall performance of the lighting system is optimized by a compromise involving lamp life and efficiency, ballast cost, and line current waveform.

For example, the circuit of Fig. 4 may operate between a minimum frequency of about 56 kHz and a maximum frequency of about 80 to 85 kHz.

The sensing of lamp current may provide all the correction necessary for changes due both to the load current variation inherent in the circuit connection to capacitor C101 and to variation in the average value of the power line voltage.

To achieve dimming of a fluorescent lamp load, or other control purposes, it may be desirable to vary the duty cycle of the switching transistors from the 50/50% cycle referred to above, in addition to the inverter frequency modulation, while at the same time keeping lamp crest factor and line current distortion within acceptable limits.

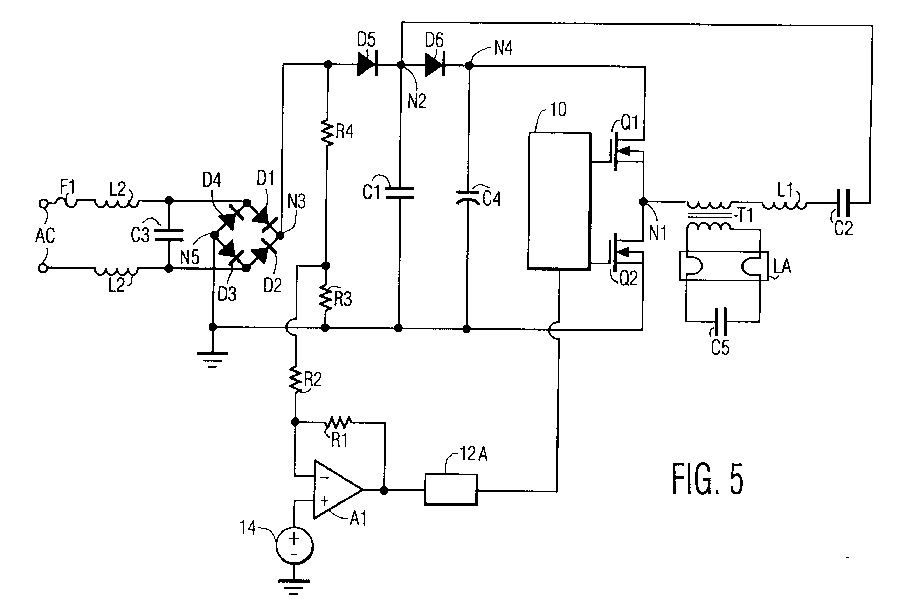

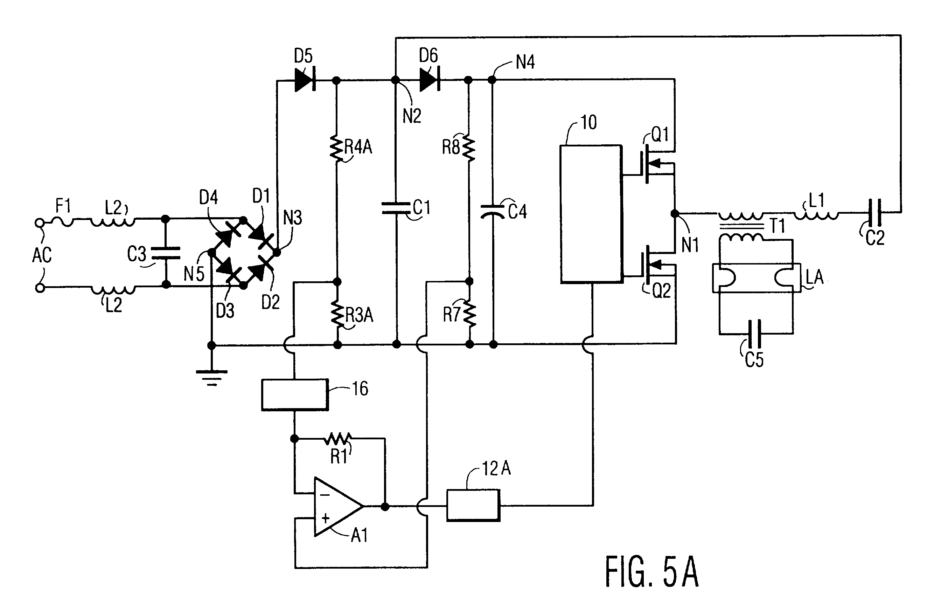

The configuration and operation of the embodiments shown in Fig. 5 and Fig. 5a is very similar to that of the embodiment in Fig. 4. However, in the embodiements shown in Fig. 5 and Fig. 5a the control signal controlling the frequency of operation of the inverter is derived from the rectified supply voltage.

In the embodiment in Fig. 5, the voltage divider R4/R3 provides a signal, through resistor R2, to the amplifier A1, which causes the inverter frequency to vary linearly with, but in the opposite direction to, the bridge rectifier output voltage. For a minimum frequency of about 56 kHz, maximum frequency may be about 80 to 85 kHz.

As above, to achieve this desired result, C2 > > C1; C4 > > C2; and |Z₀| > |Z_{LA}|, where |Z₀| = √(L1/C1) and |Z_{LA}| is the effective lamp impedance reflected to the primary side of transformer T1.
An exemplary circuit used the following component values:

| | |
|---|---|
| C1 | 47 nf |
| C2 | 330 nf |
| C3 | 470 nf |
| C4 | 87 µf |
| C5 | 4.7 nf |
| L1 | 0.15 mh |
| L2 | 800 µh |
| \|Z_{LA}\| | 23 Ω |

For example, the circuit of Fig. 5 may be modified in that the reference voltage source 14 is varied to maintain the average lamp power approximately constant. One technique for doing this uses the circuit variation of Fig. 5a.

Lamp crest factor and power variation due to line voltage fluctuation can be reduced by supplying the reference voltage source as a selected fraction of the node N4 voltage, as shown schematically in Fig. 5a. When a change in inverter frequency is maintained over a period of many line cycles, for example to compensate for a deviation in line voltage, the average ratio of component values to frequency and the voltage on the storage capacitor C4 no longer causes the inverter/load circuit to present a resistible equivalent load to the bridge rectifier; and the line current harmonics will rise somewhat. Although at the expense of a filter 16 to eliminate the high frequency components, sensing the voltage across capacitor C1, via resistors R3A and R4A, can optimize overall performance to prevent an excessive rise in the voltage across the storage capacitor C4 when a lamp has been removed, to control lamp current crest factor, or to affect lamp ignition timing. Frequency control may be based partly or completely on the voltage at node N2, filtered to remove the high frequency components.

In test of a circuit like that of Fig. 5, lamp crest factor remained below 1.6 and line current total harmonic distortion remained below 15% for line voltage variations of ± 10%. Without compensation for line voltage variation, line current total harmonic distortion was below 5%.

It will be clear to those of ordinary skill in the art that many variations of ballast circuits are possible, in accordance with the spirit of the invention. For example, although it may appear more cumbersome with 1993 technology, it may be possible to use a different form of frequency generator, such as an inverter using a transformer with a center-tapped primary, and switching transistors in the classical push-pull configuration, so long as the load seen by the rectifier can be made to look resistive. Some other form of oscillator may become desirable. Coupling from the high frequency section to the low frequency section may be through other types of circuit element or sub-circuit. Many forms of resonance circuit are used for coupling the lamp to the high frequency source. An entirely new form of coupling circuit may be devised, in which the lamp frequency is different from that of the high frequency generator; but keeping the effect that lamp current is influenced by the frequency of the high frequency generator.

## Claims

1. A circuit arrangement for operating a discharge lamp with a high frequency current comprising
- input terminals (I1,I2) for connection to a source of low frequency suply voltage,
- rectifier means (12) coupled to said input terminals for rectifying said low frequency supply voltage,
- a first circuit comprising series arrangement of unidirectional means (D6) and first capacitive means (C4) coupled to a first output terminal (N3) of said rectifier means and a second output terminal (N5) of said rectifier means (12),
- inverter means (Q3, Q4, DC) shunting said first capacitive means (C4) for generating the high frequency current out of the rectified low frequency supply voltage,
- a load circuit comprising inductive means (L), second capacitive means (C2) and terminals for lamp connection, said load circuit being coupled to a first terminal (N1) of said inverter means and to a second terminal (N2) between the unidirectional means (D6) and the first output terminal (N3) of said rectifier means (12),
characterized in that the component values and the frequency of said high frequency current are selected such that during stationary lamp operation the voltage present over the first capacitive means (C4) is always higher than the amplitude of the rectified low frequency supply voltage.

2. A circuit arrangement according to claim 1, wherein the circuit arrangement is provided with a second circuit comprising third capacitive means (C1) and connecting terminal N2 to terminal N5.

3. A circuit arrangement according to claim 1 or 2, wherein the circuit arrangement comprises a third circuit comprising further unidirectional means (D5) connected between terminal N3 and terminal N2.

4. A circuit arrangement according to claim 1, 2 or 3, wherein the unidirectional means comprise diode means.

5. A circuit arrangement according to one or more of the previous claims, wherein the inverter means comprise a series arrangement of two switching elements (Q3, Q4) and a drive circuit (DC) for generating a drive signal for rendering the switching elements alternately conducting and nonconducting.

6. A circuit arrangement according to one or more of the previous claims wherein the circuit arrangement further comprises
- sensing means for generating a control signal that varies periodically with a frequency equal to twice the frequency of the supply voltage,
- control means coupled to said sensing means for modulating the frequency of the high frequency current in dependency of the control signal.

7. A circuit arrangement according to claim 6, wherein the control signal is a measure for the momentary value of the rectified supply voltage and the control means decrease the operating frequency of the inverter means when the momentary amplitude of the rectified supply voltage increases and increase the operating frequency of the inverter means when the momentary amplitude of the rectified supply voltage decreases.

8. A circuit arrangement according to claim 6 or 7, wherein said sensing means comprises means for sensing the voltage present between terminal N3 and terminal N5 and means for filtering high frequency components from said voltage.

9. A circuit arrangement according to claim 6, wherein said sensing means comprises means for sensing said high frequency current and the control signal is a measure for said high frequency current.

10. A circuit arrangement according to claim 9, wherein the control means decrease the operating frequency of the inverter means when the momentary amplitude of the high frequency current decreases and increase the operating frequency of the inverter means when the momentary amplitude of the high frequency current increases.

## Patentansprüche

1. Schaltungsanordnung zum Betreiben einer Entladungslampe mit einem hochfrequenten Strom mit
- Eingangsklemmen (I1,I2) zum Anschluß an eine Quelle einer niederfrequenten Versorgungsspannung,
- mit den genannten Eingangsklemmen gekoppelten Gleichrichtermitteln (12) zum Gleichrichten der genannten niederfrequenten Versorgungsspannung,
- einer ersten Schaltung mit einer Reihenschaltung aus unidirektionalen Mitteln (D6) und mit mit einer ersten Ausgangsklemme (N3) der genannten Gleichrichtermittel und einer zweiten Ausgangsklemme (N5) der genannten Gleichrichtermittel (12) gekoppelten, ersten kapazitiven Mitteln (C4),
- Invertermitteln (Q3, Q4, DC), die die genannten ersten kapazitiven Mittel (C4) zum Erzeugen des hochfrequenten Stroms aus der gleichgerichteten niederfrequenten Versorgungsspannung überbrücken,
- einer Lastschaltung mit induktiven Mitteln (L), zweiten kapazitiven Mitteln (C2) und Klemmen zum Lampenanschluß, wobei die genannte Lastschaltung mit einer ersten Klemme (N1) der genannten Invertermittel und mit einer zweiten Klemme (N2) zwischen den unidirektionalen Mitteln (D6) und der ersten Ausgangsklemme (N3) der genannten Gleichrichtermittel (12) gekoppelt ist,
dadurch gekennzeichnet, daß die Komponentenwerte und die Frequenzen des genannten hochfrequenten Stroms so gewählt sind, daß bei stationärem Lampenbetrieb die an den ersten kapazitiven Mitteln (C4) anliegende Spannung immer höher ist als die Amplitude der gleichgerichteten niederfrequenten Versorgungsspannung.

2. Schaltungsanordnung nach Anspruch 1, wobei die Schaltungsanordnung mit einer zweiten Schaltung versehen ist, die dritte kapazitive Mittel (C1) umfaßt und die Klemme N2 mit der Klemme N5 verbindet.

3. Schaltungsanordnung nach Anspruch 1 oder 2, in der die Schaltungsanordnung eine dritte Schaltung umfaßt, die weitere, zwischen Klemme N3 und Klemme N2 geschaltete unidirektionale Mittel (D5) umfaßt.

4. Schaltungsanordnung nach Anspruch 1, 2 oder 3, in der die unidirektionalen Mittel Diodenmittel umfassen.

5. Schaltungsanordnung nach einem oder mehreren der vorhergehenden Ansprüche, in der die Invertermittel eine Reihenschaltung aus zwei Schaltelementen (Q3, Q4) und eine Treiberschaltung (DC) zum Erzeugen eines Treibersignals umfassen, um die Schaltelemente abwechselnd leitend und nichtleitend zu machen.

6. Schaltungsanordnung nach einem oder mehreren der vorhergehenden Ansprüche, wobei die Schaltungsanordnung weiterhin umfaßt
- Detektionsmittel zum Erzeugen eines Steuersignals, daß sich periodisch mit einer Frequenz ändert, die gleich dem Zweifachen der Frequenz der Versorgungsspannung ist,
- mit den genannten Detektionsmitteln gekoppelte Steuerungsmittel zum Modulieren der Frequenz des hochfrequenten Strom in Abhängigkeit vom Steuersignal.

7. Schaltungsanordnung nach Anspruch 6, in der das Steuersignal ein Maß für den kurzzeitigen Wert der gleichgerichteten Versorgungsspannung ist und die Steuerungsmittel die Betriebsfrequenz der Invertermittel herabsetzen, wenn die kurzzeitige Amplitude der gleichgerichteten Versorgungsspannung ansteigt, und die Betriebsfrequenz der Invertermittel erhöhen, wenn die kurzzeitige Amplitude der gleichgerichteten Versorgungsspannung abnimmt.

8. Schaltungsanordnung nach Anspruch 6 oder 7, in der das Detektionsmittel Mittel zum Detektieren der zwischen der Klemme N3 und der Klemme N5 anliegenden Spannung umfaßt und Mittel zum Herausfiltern von Hochfrequenzanteilen aus der genannten Spannung.

9. Schaltungsanordnung nach Anspruch 6, in der das genannte Detektionsmittel Mittel zum Detektieren des genannten hochfrequenten Stroms umfaßt und das Steuersignal ein Maß für den genannten hochfrequenten Strom ist.

10. Schaltungsanordnung nach Anspruch 9, in der die Steuerungsmittel die Betriebsfrequenz der Invertermittel herabsetzen, wenn die kurzzeitige Amplitude des hochfrequenten Stroms abnimmt, und die Betriebsfrequenz der Invertermittel erhöhen, wenn die kurzzeitige Amplitude des hochfrequenten Stroms ansteigt.

## Revendications

1. Montage de circuit pour activer une lampe à décharge avec un courant à haute fréquence, comprenant :
- des bornes d'entrée (I1, I2) en vue d'une connexion à une source de tension d'alimentation à basse fréquence;
- des moyens redresseurs (12) couplés auxdites bornes d'entrée pour redresser ladite tension d'alimentation à basse fréquence;
- un premier circuit comprenant un montage en série de moyens unidirectionnels (D6) et de premiers moyens capacitifs (C4) couplés à une première borne de sortie (N3) desdits moyens redresseurs et à une deuxième borne de sortie (N5) desdits moyens redresseurs (12);
- des moyens inverseurs (Q3, Q4, DC) shuntant lesdits premiers moyens capacitifs (C4) pour générer le courant à haute fréquence à partir de la tension d'alimentation à basse fréquence redressée, et
- un circuit de charge comprenant des moyens inductifs (L), des deuxièmes moyens capacitifs (C2) et des bornes en vue de la connexion d'une lampe, ledit circuit de charge étant couplé à une première borne (N1) desdits moyens inverseurs et à une deuxième borne (N2) entre les moyens unidirectionnels (D6) et la première borne de sortie (N3) desdits moyens redresseurs (12),
caractérisé en ce que les valeurs des composants et la fréquence dudit courant à haute fréquence sont sélectionnées de sorte que, pendant le fonctionnement stationnaire de la lampe, la tension présente sur les premiers moyens capacitifs (C4) soit toujours supérieure à l'amplitude de la tension d'alimentation à basse fréquence redressée.

2. Montage de circuit suivant la revendication 1, dans lequel le montage de circuit est pourvu d'un deuxième circuit comprenant des troisièmes moyens capacitifs (C1) et connectant la borne N2 à la borne N5.

3. Montage de circuit suivant la revendication 1 ou 2, dans lequel le montage de circuit comprend un troisième circuit comprenant d'autres moyens unidirectionnels (D5) connectés entre la borne N3 et la borne N2.

4. Montage de circuit suivant la revendication 1, 2 ou 3, dans lequel les moyens unidirectionnels comprennent des moyens à diodes.

5. Montage de circuit suivant une ou plusieurs des revendications précédentes, dans lequel les moyens inverseurs comprennent un montage en série de deux éléments de commutation (Q3, Q4) et un circuit de commande (DC) pour générer un signal pilote pour rendre les éléments de commutation alternativement conducteurs et non conducteurs.

6. Montage de circuit suivant une ou plusieurs des revendications précédentes, dans lequel le montage de circuit comprend en outre :
- des moyens de détection pour générer un signal de commande qui varie périodiquement avec une fréquence égale à deux fois la fréquence de la tension d'alimentation, et
- des moyens de commande couplés auxdits moyens de détection pour moduler la fréquence du courant à haute fréquence en fonction du signal de commande.

7. Montage de circuit suivant la revendication 6, dans lequel le signal de commande est une mesure de la valeur du moment de la tension d'alimentation redressée, et dans lequel les moyens de commande réduisent la fréquence de fonctionnement des moyens inverseurs lorsque l'amplitude du moment de la tension d'alimentation redressée augmente, et augmentent la fréquence de fonctionnement des moyens inverseurs lorsque l'amplitude du moment de la tension d'alimentation redressée diminue.

8. Montage de circuit suivant la revendication 6 ou 7, dans lequel lesdits moyens de détection comprennent des moyens pour détecter la tension présente entre la borne N3 et la borne N5 et des moyens pour filtrer les composantes à haute fréquence de ladite tension.

9. Montage de circuit suivant la revendication 6, dans lequel lesdits moyens de détection comprennent des moyens pour détecter ledit courant à haute fréquence et le signal de commande est une mesure dudit courant à haute fréquence.

10. Montage de circuit suivant la revendication 9, dans lequel les moyens de commande réduisent la fréquence de fonctionnement des moyens inverseurs lorsque l'amplitude du moment du courant à haute fréquence décroît, et augmentent la fréquence de fonctionnement des moyens inverseurs lorsque l'amplitude du moment du courant à haute fréquence augmente.
